# EUROPEAN PATENT APPLICATION

(11) **EP 2 412 244 A1**
(43) Date of publication of application: **01.02.2012**
(21) Application number: 10425260.6
(22) Date of filing: 29.07.2010
(51) Int. Cl.: A21C 5/00

(54) **APPARATUS FOR CUTTING DOUGHS**

(71) Applicant: Esmach S.p.A., 36040 Grisignano di Zocco (VI) (IT)
(72) Inventor: Carollo, Paolo, 36040 Sossano (Vicenza) (IT); Borinato, Stefano, 35030 Veggiano (Padova) (IT)
(74) Representative: Lissandrini, Marco

(57) **Abstract**

An apparatus (1) for cutting doughs comprises: a supporting framework (2) forming at least one containment tank (4) for a dough; a lid (7) able to move between a closed position in which it closes the tank (4) and an open position in which it allows access to the tank (4); means (9) for compressing the dough acting in the tank (4); means (28) for cutting the dough contained in the tank (4) for separating the dough into a plurality of portions of dough; an annular body (17) being removably associated with the inside of the tank (4) for defining with the respective inner surface (20) a containment space (18) for the dough having a predetermined shape.

## Description

This invention relates to an apparatus for cutting doughs, of the type used in the food industry, and in particular in the bread-making/cake and pastry-making sector.

Apparatuses for cutting doughs, commonly known as "dividers", normally comprise a tank, in which the dough is housed, closed at the top by a lid.

Inside the tank there are means for compressing the dough, consisting of the bottom surface of the tank which can slide towards the lid driven by an actuator, for example of the pneumatic type. In this way, the bottom surface is moved inside the tank, pressing the dough against the lid.

Inside the tank there are also means for cutting the dough, comprising a plurality of blades which can come out towards the tank through openings made in the bottom surface.

In particular, the blades pass through a set of through slots designed to form cutting lines for the dough. For example, the slots may be positioned perpendicular to each other (grid-style), to form a plurality of portions of dough having identical dimensions.

In this way, once the dough has been inserted in the tank, it is first compressed against the lid and then cut into individual portions by the blades which come out.

However, the apparatuses described above are not very versatile, since they can only produce portions of dough having standardised dimensions and shape.

To overcome that disadvantage, apparatuses were made which can adapt the cutting means to the desired number and outline for each portion of dough.

There are prior art apparatuses in which the cutting means comprise punches with a grille-style structure with cutting profile. That structure forms a set of through holes, each positioned in such a way as to form a respective portion of dough. In this way, by positioning the grille between the tank and the lid, the movement of the bottom surface forces the dough to pass through the grille, forming a set of portions of dough having a predetermined shape.

The punches can be removed from the rest of the apparatus for easy substitution according to the particular pattern created by the grille. Consequently, a respective grille is prepared according to the outline to be given to each individual portion of dough and according to the number of portions of dough to be obtained. However, that solution is also not without significant disadvantages.

Despite the possibility of changing the grille pattern, the dough containment tank in any case has an outline and a volume which cannot be changed. Consequently, using a punch with a grille whose outer edge does not coincide with the outer edge of the tank results in a considerable amount of waste material during dough compression operations.

For example, when tank has a rectangular outer edge, if a punch with a circular grille zone is used, during the dough cutting action waste is produced between the rectangular edge of the tank and the circular edge of the grille.

In this context, the technical purpose which forms the basis of this invention is to propose an apparatus which overcomes the above-mentioned disadvantages of the prior art.

In particular, this invention aims to provide a versatile apparatus, able to produce any number of portions of dough having any shape, and at the same time able to eliminate the production of waste.

The technical purpose indicated and the aims specified are substantially achieved by an apparatus for cutting doughs with the technical features described in one or more of the appended claims.

Further features and advantages of this invention are more apparent from the non-limiting description which follows of a preferred embodiment of an apparatus for cutting doughs, illustrated in the accompanying drawings, in which:
- Figure 1 is a perspective view of a first embodiment of an apparatus for cutting doughs in accordance with this invention;
- Figure 2 is a perspective, exploded view of a construction detail of the apparatus of Figure 1;
- Figure 3 is a perspective view of a second embodiment of an apparatus for cutting doughs;
- Figures 4 to 7 are, respectively, perspective and exploded views of a construction detail of the apparatus of Figure 3;
- Figure 8 is a perspective and exploded view of a third embodiment of an apparatus for cutting doughs in accordance with this invention.

With reference to the accompanying drawings the numeral 1 denotes as a whole an apparatus for cutting doughs in accordance with this invention. The apparatus 1 comprises a supporting framework 2 in the form of a body having the shape of a parallelepiped, mounted on wheels 3, and with a tank 4 at the top.

The framework 2 comprises a front 5 on which the controls 6 are mounted, the controls acting on motor means (described below) which are not illustrated in detail and are inserted inside the framework 2.

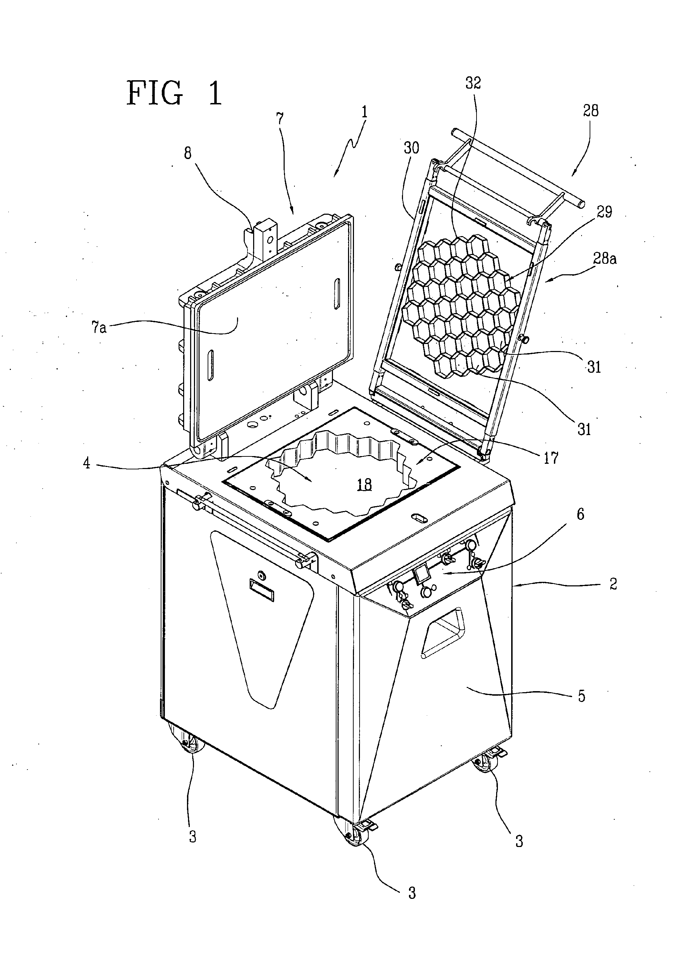

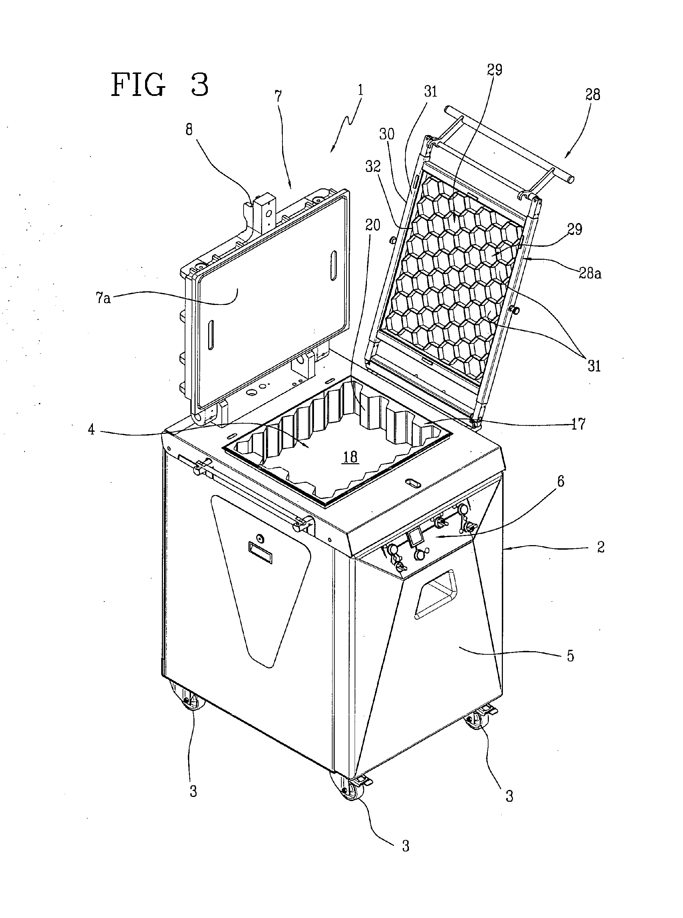

The containment tank 4 is designed to house the dough to be cut into equal parts, and is equipped with a lid 7 able to move between a closed position (not illustrated) in which it closes the top of the tank 4 and an open position in which it clears the access opening to the tank 4 (Figures 1 and 3).

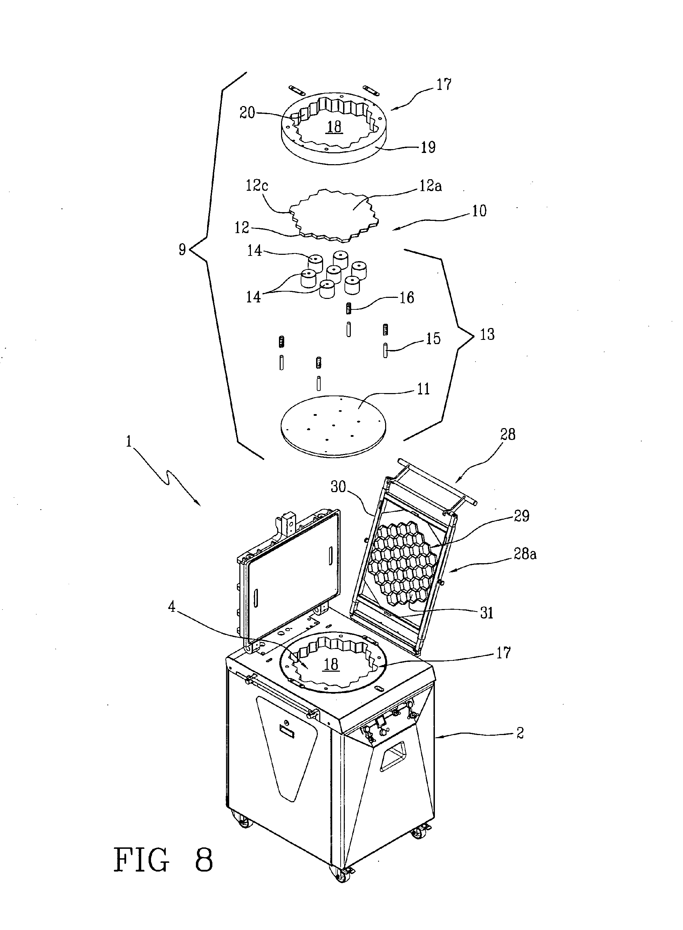

The tank 4 preferably comprises a compartment having a prismatic shape with a rectangular base and the lid 7 comprises a rectangular surface 7a designed to completely close the access opening to the compartment. In accordance with the third embodiment illustrated in Figure 8, the tank 4 may comprise a compartment having a cylindrical shape and therefore a circular base.

The lid 7 is hinged around an axis (in practice horizontal) positioned close to the rear part of the upper side of the framework 2.

Moreover, in the known way the lid 7 has a handle for moving it, and there are hooking means 8 for rigidly connecting the lid 7 to the framework 2 when the lid is in the closed position.

The apparatus also comprises compression means 9 for the dough, said means being positioned inside the framework 2 and acting in the tank 4.

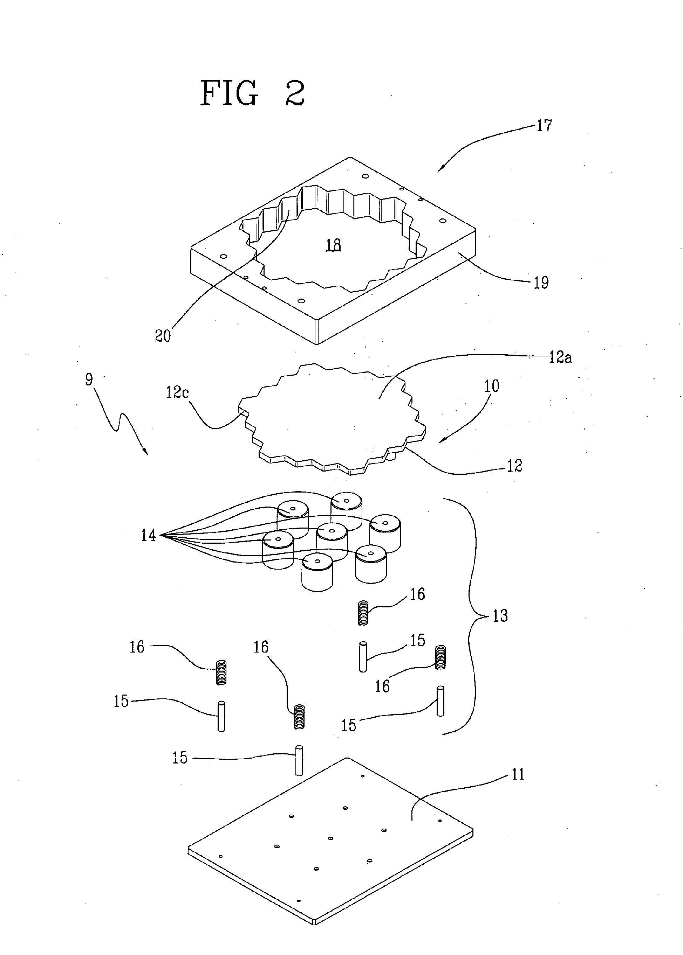

In particular, the compression means 9 (Figure 2) comprise a bottom surface 10 of the tank 4 not visible in Figure 1, on which the dough to be cut is placed.

The bottom surface 10 can move towards the lid 7 to compress the dough by means of the action of suitable motor means housed in the framework 2, of the known type and therefore not illustrated and described.

In more detail, the bottom surface 10 comprises an actuator 11, with a flat plate, operatively connected to the motor means in such a way that it can move with alternate vertical motion towards/away from the lid. Associated with the top of the actuator 11 there is a shaped element 12 able to slide inside the tank 4 as described in more detail below. With reference to the first embodiment shown in Figure 2, the flat plate is rectangular. Alternatively, the flat plate may be circular, in accordance with the third embodiment illustrated in Figure 8.

Figures 2 and 8 reveal how the shaped element 12 is a flat plate having an upper surface 12a facing towards the tank 4 and opposite the lid 7 when the lid is in the closed condition, and a lower surface 12b opposite the actuator 11 and connected to the actuator 11 by suitable removable engagement means 13.

In detail, the engagement means 13 are interposed between the actuator 11 and the shaped element 12 for engaging/disengaging the latter to/from the actuator 11. Advantageously, in this way the shaped element 12 may be removed and substituted with another shaped element 12 having a different shape. The engagement means 13 preferably comprise a plurality of spacers 14 associated with the lower surface 12b of the shaped element and anchored to the actuator 11 by means of connecting pins 15. The pins 15 are equipped with helical springs 16 for damping the compression operation against the dough and promoting the return of the bottom surface 10 to a distanced condition, at the end of the compression operation.

The apparatus 1 is also equipped with at least one annular body 17 removably inserted in the tank 4 and forming a space 18 having a predetermined shape and designed to contain the dough.

In particular with reference to Figures 1, 2 and 8, it should be noticed that the annular body 17 forms a frame which can be inserted in the tank 4 and comprises an outer surface 19 whose profile coincides with the lateral walls of the tank 4. Extending on the opposite side to the outer surface 19 there is an inner surface 20 shaped according to the shape to be given to the containment space 18. In other words, the containment space 18 for the dough has a shape defined by the shape of the inner surface 20.

In the embodiments illustrated in Figures 1, 2 and 8, the annular body 17 comprises an inner surface 20, having a substantially hexagonal shape. Similarly, in this embodiment the shaped element 12 also has an outer edge 12c shaped to match the inner surface 20 of the annular body 17. In this way, during movement of the bottom surface 10, the shaped element 12 slides inside the space 18 with the respective edge 12c grazing the inner surface 20. It should also be noticed that in this situation during the movement for compression of the dough the actuator 11 moves towards the annular body 17 without interfering with the inside of the space 18.

As indicated, the shaped element 12 may advantageously be removed or substituted thanks to the presence of the removable engagement means 13. If the shaped element 12 is removed or substituted with another shaped element 12 having a different shape, the annular body 17 is also substituted with another annular body having a different shape and, in particular, having an inner surface 20 shaped to match the outer edge 12c of the shaped element 12. In this way, it is possible to guarantee that, during movement of the bottom surface 10, the shaped element 12 slides inside the space 18 with the respective edge 12c grazing the inner surface 20.

Figure 3 shows a second embodiment, in which the annular body 17 comprises an inner surface 20 having a different outline. In this case, the shaped element 12 also has a different shape, so that it can pass inside the entire space 18 formed by the annular body 17.

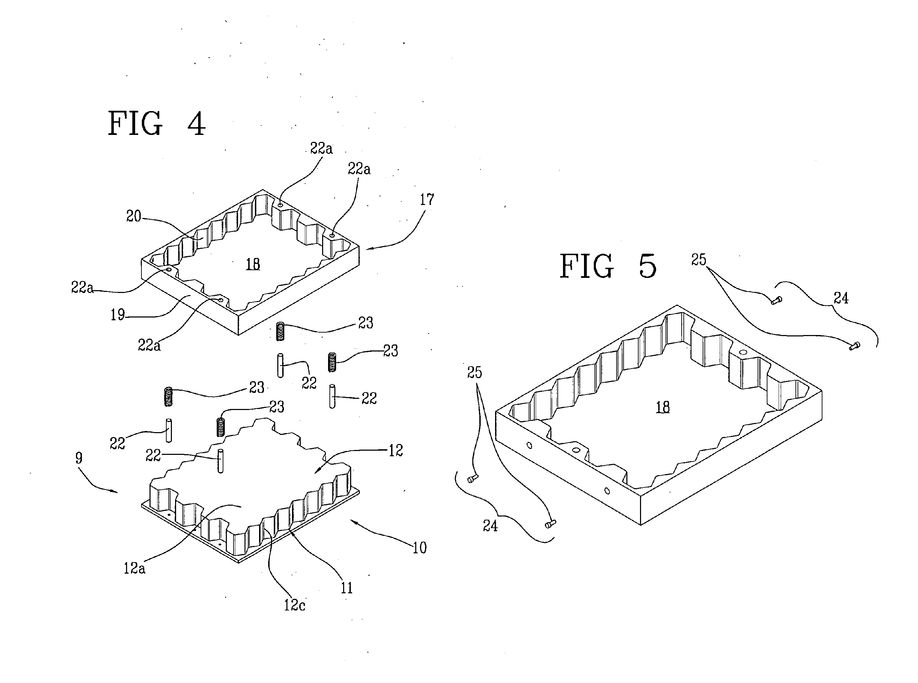

Moreover, with reference to Figures 4 to 6, it should be noticed that the shaped element 12 associated with the actuator 11 may comprise a prismatic body, unlike that shown in Figure 2, in which the shaped element 12 is plate-shaped.

Again, the bottom surface 10 is associated with the annular body 17 by suitable elastic elements which allow the bottom surface 10 to be returned to a distanced condition at the end of the compression operations. In particular (Figure 4), the elastic elements comprise a set of connecting pins 22 which engage in the actuator 11 and pass through respective cavities 22a made in the annular body 17. Extending around each pin 22 there is a helical spring 23 which is compressed when the bottom surface 10 is moved towards the lid 7 of the apparatus.

Advantageously, at the end of the compression action, the helical springs 23 move the bottom surface 10 away from the lid 7, thus removing the shaped element 12 from the space 18.

The apparatus 1 also comprises removable fastening means 24 which engage with the annular body 17 for moving the annular body between a stable fastened condition, in which it is inserted in the tank 4, and an unfastened position (not illustrated), in which it is removed from the tank 4.

In accordance with a first embodiment illustrated in Figure 5, the fastening means 24 comprise a set of screws 25 which are inserted in respective holes made in the lateral surface of the tank 4 and in the inner surface 20 of the annular body 17. In this way, by manually acting on the screws 25 it is possible to engage/disengage the annular body 17 with/from the tank 4 so as to substitute it.

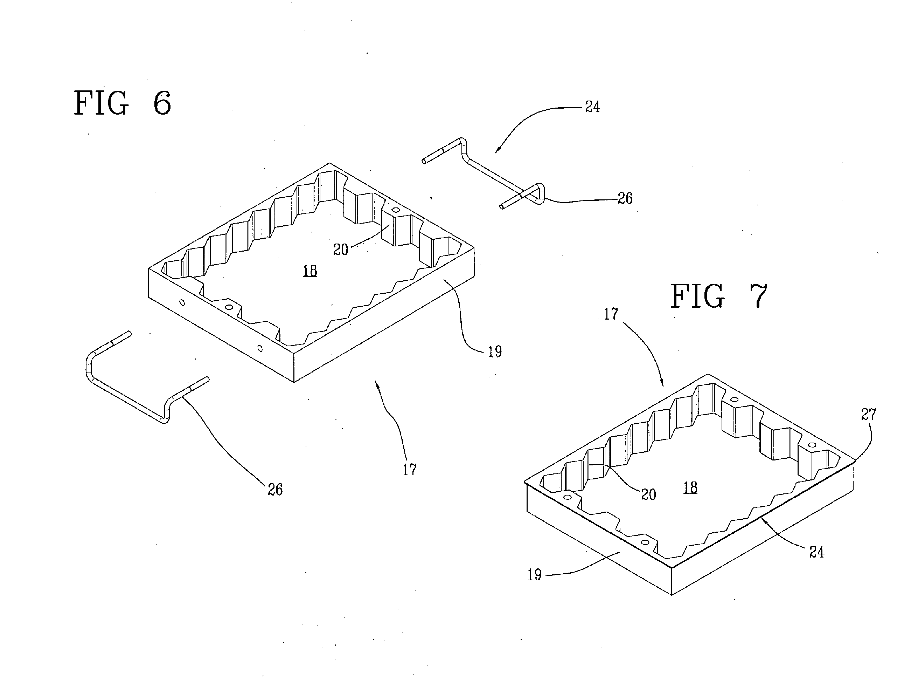

In another embodiment illustrated in Figure 6, the fastening means 24 comprise a pair of handles 26 which can be anchored to respective fastening elements, of the known type and therefore not illustrated and described in detail, and projecting from the framework 2.

In the embodiment shown in Figure 7, the fastening means 24 comprise a projecting edge 27 extending from the outer surface 19 of the annular body 17. The projecting edge 27 allows the annular body 17 to be held suspended in the tank 4, without constraining it to the framework 2.

Advantageously, irrespective of the embodiments described above, the fastening means 24 allow easy, rapid removal of the annular body 17, to render it substitutable according to the outline of the inner surface 20 which must be used.

Similarly, the engagement means allow rapid substitution of the shaped element 12 according to the outline of the lateral edge 12c which must be used, irrespective of the embodiment illustrated in the Figures.

The apparatus 1 also comprises means 28 for cutting the dough which are housed in the tank 4 and designed to separate the dough into a plurality of portions.

The cutting means 28 comprise a punch 28a, positioned on the supporting framework 2 at the tank 4.

In the preferred embodiment, the punch 28a is hinged to the framework in such a way that it can move between an operating condition (not illustrated), in which it is positioned between the lid 7 in the closed position and the tank 4, and a non-operating condition in which it is distanced from the tank 4 (Figures 1 and 3).

The punch comprises a substantially rectangular perimeter portion 30, designed to support a grille-style portion 29 having a predetermined pattern with cutting profile.

The pattern of the grille-style portion 29 forms a plurality of through holes 31, each of which is designed to produce a single portion of dough.

It should be noticed that the grille-style portion 29 is between an outer edge 32 which, with the punch 28a in the operating condition, coincides with the outline of the inner surface 20 of the annular body 17. In this situation, the through holes 31 in the grille-style portion 29 are formed inside the outer edge 32.

Consequently, the entire dough housed in the tank 4 is forced through the through holes 31 of the grille-style portion 29 by the action of the compression means 9. In this way, the dough is divided into a set of portions, each obtained from a respective through hole 31.

Advantageously, the punch 28a is also removably associated with the framework 2 so that it can be removed from the framework 2 and substituted according to the outline to be given to each portion of dough.

Advantageously, the punch 28 and consequently also the annular body 17 and the shaped element 12 are mounted on the apparatus based on the shape and number of portions of dough which must be obtained. For example, as illustrated in Figures 1, 2 and 8, according to the number of portions of dough which must be obtained, a respective punch 28a is prepared forming a corresponding number of through holes 31. Consequently, a respective annular body 17 is prepared, having an inner surface 20 matching the outer edge 32 of the grille-style portion 29. Therefore, the shaped element 12 is also selected according to its outer edge 12c which is designed to slide on the inner surface 20 of the body 17 during the compression action.

Advantageously, it should be noticed that the entire dough located in the tank 4 is made to pass entirely through the grille-style portion 29. In this way, no waste is generated from the dough. That advantage is mainly due to the presence of the annular body 17 which defines the shape of the containment space 18. In this way, the shape of the space 18 is adapted to any type of punch 28a prepared for making the portions of dough.

Another consequent advantage of this invention is the versatility of the apparatus 1, able to make any quantity and type of portion of dough, by means of the interchangeable nature of the punch 28a and the respective annular body 17.

## Claims

1. An apparatus for cutting doughs, comprising:
a supporting framework (2) for at least a containment tank (4) for a dough;
a lid (7) which can move between a closed position in which it closes the tank (4) and an open position in which it allows access to the tank (4);
means (9) for compressing the dough which act in the tank (4); and
means (28) for cutting the dough contained in the tank (4) for separating the dough into a plurality of portions of dough,
**characterised in that** it comprises at least one annular body (17) removably associated with the inside of the tank (4) and forming a containment space (18) for the dough having a predetermined shape.

2. The apparatus according to the foregoing claim, **characterised in that** the annular body (17) comprises an outer surface (19) which can be associated with lateral walls of the tank (4) and an inner surface (20) shaped according to the shape to be given to the containment space (18).

3. The apparatus according to either of the foregoing claims, **characterised in that** it also comprises removable fastening means (24), engaging with the annular body (17) for moving the annular body (17) between a stable fastened condition, in which it is associated with the tank (4), and an unfastened condition in which it is removed from the tank (4).

4. The apparatus according to any of the foregoing claims, **characterised in that** the compression means (9) comprise a bottom surface (10) of the tank (4) able to move towards the lid (7) for compressing the dough.

5. The apparatus according to claim 4, **characterised in that** the bottom surface (10) comprises an actuator (11) able to move towards/away from the annular body (17) and comprising a shaped element (12), located above the actuator (11), for sliding inside the containment space (18) for the dough.

6. The apparatus according to the foregoing claim, **characterised in that** the shaped element (12) comprises a lateral edge (12c) able to slide on the inner surface (20) of the annular element (17), said lateral edge (12c) being shaped to match the outline of the inner surface (20) of the annular element (17).

7. The apparatus according to claim 6, **characterised in that** it also comprises removable engagement means (13), interposed between the actuator (11) and the shaped element (12) for moving the shaped element (12) between a first condition in which it is stably engaged with the actuator (11) and a second condition in which it can be disengaged from the actuator (11).

8. The apparatus according to any of the claims from 2 to 7, **characterised in that** the cutting means (28) comprise a punch (28a), positioned on the supporting framework (2) at the tank (4) and able to move between an operating condition in which the punch (28a) is positioned between the lid (7) and the tank (4), and a non-operating condition in which the punch (28a) is distanced from the tank (4).

9. The apparatus according to claim 8, **characterised in that** the punch (28a) comprises a grille-style portion (29) having a predetermined pattern with cutting profile forming a plurality of through holes (31), each hole (31) forming an individual portion of dough.

10. The apparatus according to claim 9, **characterised in that** the grille-style portion (29) comprises an outer edge (32) which, with the punch (28a) in the operating condition, coincides with the inner surface (20) of the annular body (17).

11. The apparatus according to claim 10, **characterised in that** the through holes (31) in the grille-style portion (29) are formed inside the outer edge (32), the dough being pressed by the compression means (9) in such a way that all of the dough passes through the through holes (31).

12. The apparatus according to any of the claims from 8 to 11, **characterised in that** the punch (28a) is removably associated with the framework (2) so that it can be removed from the framework (2) and substituted according to the outline to be given to each portion of dough.
